# EUROPEAN PATENT APPLICATION

(11) **EP 1 705 854 A1**
(43) Date of publication of application: **27.09.2006**
(21) Application number: 05102257.2
(22) Date of filing: 22.03.2005
(51) Int. Cl.: H04L 29/06, H04Q 7/38

(54) **Method and apparatus for sharing cryptographic information in a mobile communication system**

(71) Applicant: Research In Motion Limited, Waterloo, Ontario N2L 3W8 (CA)
(72) Inventor: Brown, Michael S., N2K 4B1, Waterloo Ontario (CA); Brown, Michael K., Kitchener, Ontario N2M 2Z2 (CA); Adams, Neil, Waterloo, Ontario N2K 4E4 (CA); Little, Herb, Waterloo, Ontario N2T 2V8 (CA); Davis, Dinah, N2L 2J3, Waterloo, Ontario (CA)
(74) Representative: Rickard, David John

(57) **Abstract**

A system (100) includes a server (102), a first client device (104) to communicate in an authenticated and secured manner with the server (102) over a first communication link (110), and a second client device (106) to communicate in an authenticated and secured manner with the first client device (104) over a second communication link (112). The first client device (104) is to cause the server (102) and the second client device (106) to share cryptography information. The cryptography information may then be used to secure a third communication link (108) between the server (102) and the second client device (106) that does not connect the first client device (104).

## Description

It is often desirable to secure messages exchanged over electronic communication links, wireless or not, from electronic attacks. Such protection, at least in part, may be achieved by employing digital certificates and cryptographic keys to authenticate, encrypt and decrypt the messages. Both symmetric-key systems (also known as "secret-key systems") and public-key systems are commonly used.

With a public-key system, each communicating party employs two cryptographic keys - a private key and a public key. The private key is kept in secret, and should never be disclosed by one party to another. The public key can be freely distributed. Once a first party has knowledge of the public key of a second party, the first party can use the public key to encrypt messages destined for the second party. Decryption of the message requires the private key of the second party. Therefore, as long as this private key is kept in secret by the second party, only the second party can decrypt the message.

If a communication link used for exchanging public keys is not authenticated (that is, the identities of the parties cannot be verified), a hostile third party may be able to carry out a "man in the middle" attack. In such an attack, the hostile third party fools two parties into thinking that they are communicating directly with one another when, in fact, the hostile third party is actually intercepting all traffic between the two parties.

With a symmetric-key system, two communicating parties share a single, common cryptographic key that together with a symmetric algorithm is used for both encryption and decryption of messages flowing in both directions. In some systems, one party generates the symmetric key and sends it to the other. Exchange of encrypted messages using a symmetric key is considered to be faster and simpler than with a public-key system. To prevent a hostile third party from retrieving a symmetric key from a communication link, it is important to share the symmetric key in a secured manner.

A communication system may, for example, store one or more secret keys for performing secure communication on behalf of users, and the users may identify themselves to the communication system with user names and passwords. If increased security and authentication is required, users may have personalized security devices to store their secret keys and to authenticate themselves to a communication system that does not store secret keys. A user may couple the security device to the communication system when the secret key is required for authentication or decryption.

### BRIEF DESCRIPTION OF THE DRAWINGS

Embodiments of the invention are illustrated by way of example and not limitation in the figures of the accompanying drawings, in which like reference numerals indicate corresponding, analogous or similar elements, and in which:

Figure 1 is a block diagram of an exemplary simplified system, according to some embodiments of the invention;

Figure 2 is a schematic diagram of an exemplary system, according to some embodiments of the invention;

Figure 3 is a flowchart of an exemplary method to be performed by a client device, according to some embodiments of the invention;

Figures 4 and 5 are flowcharts of exemplary methods for checking whether a client device is permitted to communicated securely with a server, according to some embodiments of the invention;

Figures 6, 7 and 8 are flowcharts of exemplary methods to be performed by a client device to cause another client device and a server to share a symmetric key, according to some embodiments of the invention;

Figure 9 is a flowchart of an exemplary method to be performed by a client device to cause another client device and a server to exchange their public keys, according to some embodiments of the invention;

Figure 10 is a schematic diagram of another exemplary system, according to some embodiments of the invention; and

Figure 11 is a block diagram of an exemplary simplified system, according to embodiments of the invention.

It will be appreciated that for simplicity and clarity of illustration, elements shown in the figures have not necessarily been drawn to scale. For example, the dimensions of some of the elements may be exaggerated relative to other elements for clarity.

### DETAILS

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

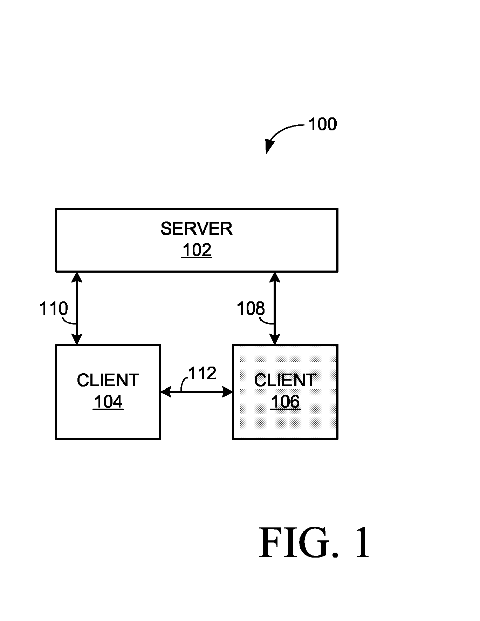

Figure 1 shows a block diagram of an exemplary simplified system 100, according to embodiments of the invention. System 100 includes a server 102, a client device 104 and a client device 106. Server 102 and client device 106 are able to communicate over a communication link 108, server 102 and client device 104 are able to communicate over a communication link 110, and client devices 104 and 106 are able to communicate over a communication link 112.

According to some embodiments of the invention, communication links 110 and 112 are authenticated, although one of these links may also be secured. According to other embodiments of the invention, communication links 110 and 112 are both authenticated and secured.

Communication link 108 may be a wired communication link, a wireless communication link, an optical communication link or any combination thereof. In addition, communication link 108 may be a direct communication link between server 102 and client 106, or may include any combination of additional communication devices (not shown) such as gateways, routers, switches, and the like. Communication link 108 may be accessible to other devices and may be susceptible to intrusions and unwanted attacks.

In order for server 102 and client 106 to communicate in a secured manner over communication link 108, server 102 and client 106 must share cryptography information, for example their respective public keys and/or a symmetric key. However, if communication link 108 is not authenticated, then it is not safe for server 102 and client 106 to use it to exchange public keys or a symmetric key. Even if communication link 108 is authenticated, if it is not secure, then it is not safe for server 102 and client 106 to use it for exchanging a symmetric key.

According to embodiments of the invention, client device 104 can cause server 102 and client device 106 to share cryptography information that can be used to secure communication link 108 for communication between server 102 and client device 106.

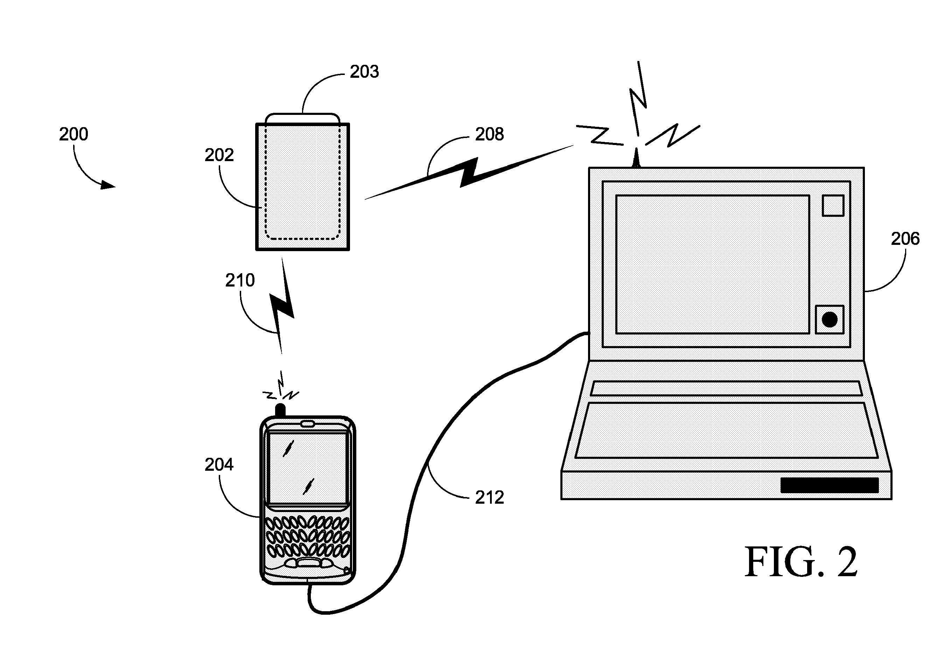

For clarity, the following explanation refers to a particular example, shown in figure 2 as system 200, in which client device 104 is a wireless-enabled mobile device 204, client device 106 is a wireless-enabled personal computer 206, and server 102 is a smart card reader 202. A smart card 203 is shown inserted into smart card reader 202.

Smart cards are personalized security devices, defined by the ISO7816 standard and its derivatives, as published by the International Organization for Standardization. A smart card may have a form factor of a credit card and may include a semiconductor device. The semiconductor device may include a memory that can be programmed with a secret key and with an authentication certificate, and may include a decryption engine, e.g. a processor and/or dedicated decryption logic. A smart card may include a connector for powering the semiconductor device and performing serial communication with an external device. Alternatively, smart card functionality may be embedded in a device having a different form factor and different communication protocol, for example a Universal Serial Bus (USB) device.

The person whose security information is stored on smart card 203 may use smart card reader 202 for identification and to digitally sign and/or decrypt messages sent by mobile device 204.

For example, mobile device 204 may be able to send and receive e-mail messages via an e-mail server (not shown). If, for example, the Secure Multipurpose Internet Mail Extensions (S/MIME) protocol is used, e-mail messages received at mobile device 204 are encrypted using a symmetric algorithm with a random session key generated by the sender of the e-mail message. The e-mail message also includes the session key, encrypted using the public key of the recipient. Upon receipt of an encrypted e-mail message, mobile device 204 may extract the encrypted session key and send it to smart card reader 202 via a communication link 210. Smart card reader 202 may send the encrypted session key to smart card 203, and the decryption engine of smart card 203 may decrypt the encrypted session key using the recipient's private decryption key, which is stored in smart card 203. Smart card reader 202 may retrieve the decrypted session key from smart card 203 and forward it to mobile device 204 via communication link 210 so that mobile device 204 can decrypt the received e-mail message. Smart card 203 may prevent unauthorized use of the recipient's private decryption key by requiring that a password or personal identification number (PIN) be supplied before allowing the decryption operation to proceed.

Similarly, to add a digital signature to an e-mail message being sent by mobile device 204, mobile device 204 may send a hash of the contents of the e-mail message to smart card reader 202 over communication link 210. Smart card reader 202 may pass the hash to smart card 203, which may produce a digital signature from the hash and the sender's private signing key, which is stored in smart card 203. Smart card 203 may then pass the digital signature to smart card reader 202, which may forward it to mobile device 204 via communication link 210 so that mobile device 204 can transmit it along with the e-mail message to the e-mail server. Again, smart card 203 may prevent unauthorized use of the recipient's private signing key by requiring that a password or PIN be supplied before allowing the signing operation to proceed.

Communication link 210 may be a wired communication link, a wireless communication link, an optical communication link or any combination thereof. As shown in Figure 2, communication link 210 is a wireless communication link, for example a Bluetooth® communication link. The unencrypted session key should be sent securely over communication link 210 from smart card reader 202 to mobile device 204 to prevent a third party from retrieving the session key from communication link 210. Similarly, the hash to be signed should be sent authentically over communication link 210 from smart card reader 202 to mobile device 204 to prevent a third party from modifying the hash and thereby causing smart card 203 to produce a signature using a hash different from the hash of the intended message.

Smart card reader 202 and mobile device 204 may each store a common, symmetric key and use a symmetric algorithm to secure communications over communication link 210. Alternatively, smart card reader 202 and mobile device 204 may store their own private keys and each other's public keys, and use an asymmetric algorithm to secure communications over communication link 210.

The person whose security information is stored on smart card 203 may wish to digitally sign outgoing e-mail sent from personal computer 206 or to decrypt incoming encrypted e-mail received at personal computer 206. This will require personal computer 206 to communicate with smart card reader 202 in much the same way as mobile device 204 communicates with smart card reader 202 as described above. For this purpose, or for other security-related measures (e.g. to permit the person to use personal computer 206), communication link 208 will need to be secured. Communication link 208 may also be a wireless communication link, for example a Bluetooth® communication link.

According to some embodiments of the invention, mobile device 204 may cause personal computer 206 and smart card reader 202 to share cryptography information that is to be used to secure communication link 208.

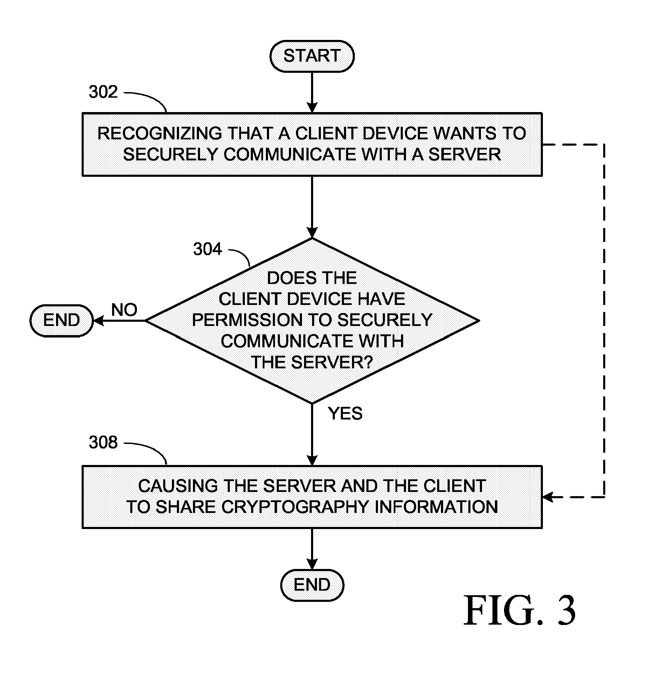

Figure 3 shows an exemplary method to be performed by client device 104, for example mobile device 204, according to some embodiments of the invention. At 302, mobile device 204 may recognize that client device 106, for example, personal computer 206, wants to securely communicate with server 102, for example, smart card reader 202. For example, the person may connect personal computer 206 to mobile device 204 with a communication link 212 that does not compromise security or authentication, for example a USB cable. Mobile device 204 may automatically recognize that personal computer 206 wants to securely communicate with smart card reader 202 once communication link 212 has been established. Alternatively, personal computer 206 may transmit such a request to mobile device 204 via communication link 212.

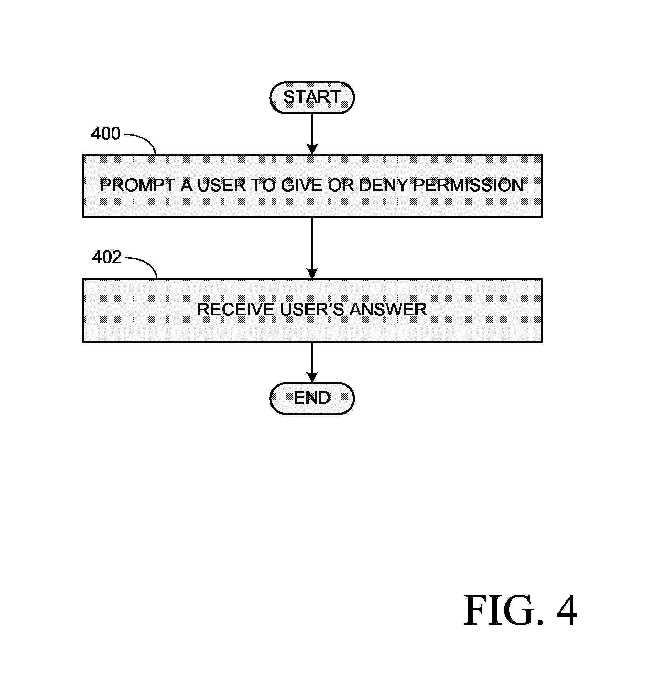

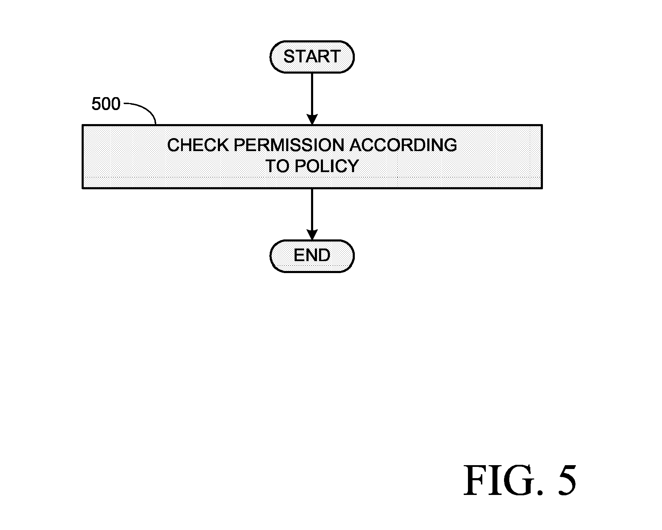

At 304, mobile device 204 may check whether personal computer 206 is permitted to share cryptographic information with smart card reader 202 and to securely communicate with smart card reader 202. For example, as shown in figure 4, mobile device 204 may ask a user for that permission at 400 and may receive the user's answer at 402. In another example, as shown in figure 5, mobile device 204 may check permission according to a policy at 500. The policy may be stored and/or performed in mobile device 204, in smart card reader 202 or elsewhere, or may be distributed among more than one device. For example, the policy may include a list of approved client devices that may connect securely to smart card reader 202. If personal computer 206 is not granted permission, the method of figure 3 may terminate. However, if permission is granted, at 308, mobile device 204 may cause smart card reader 202 and personal computer 206 to share cryptography information.

Alternatively, mobile device 204 may not be required to check for permission, and the method will proceed from 304 directly to 308.

Once smart card reader 202 and personal computer 206 have shared cryptography information, they can send information over communication link 208 in a secured and authenticated manner. A non-exhaustive list of examples for such information includes a digital signature and a decrypted session key of an S/MIME e-mail message.

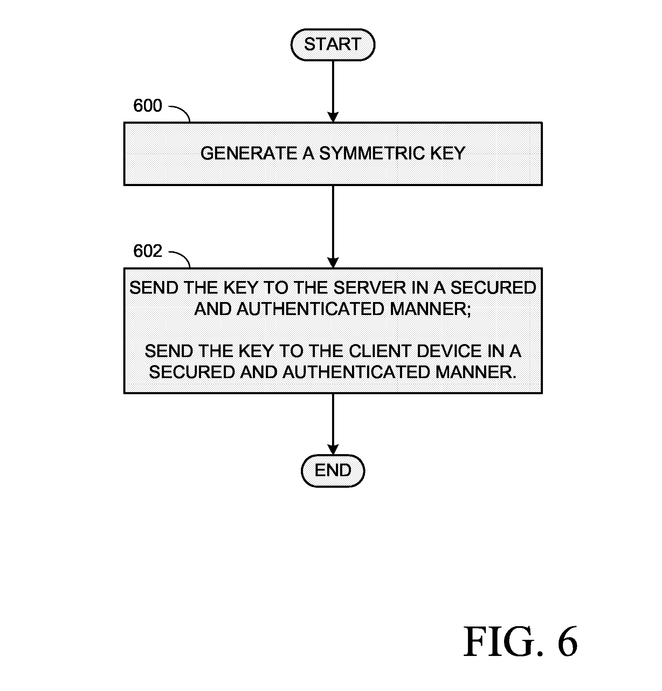

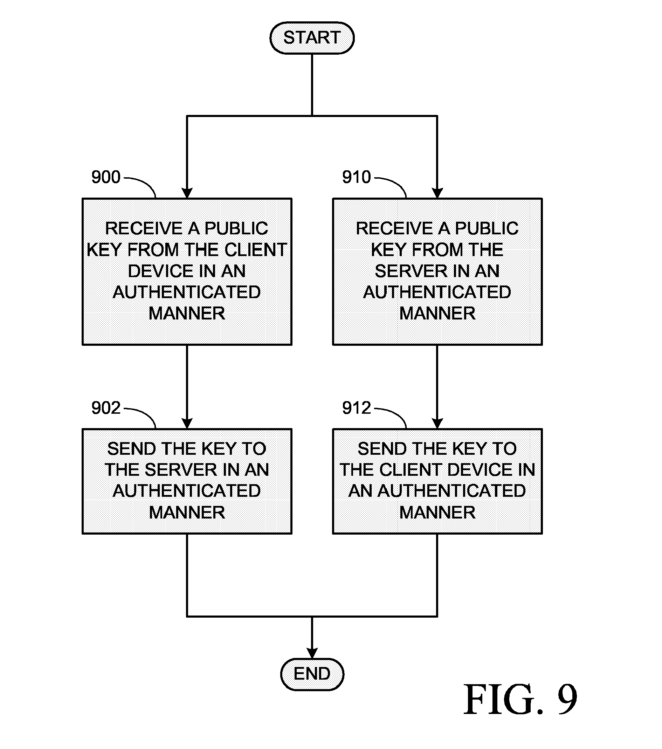

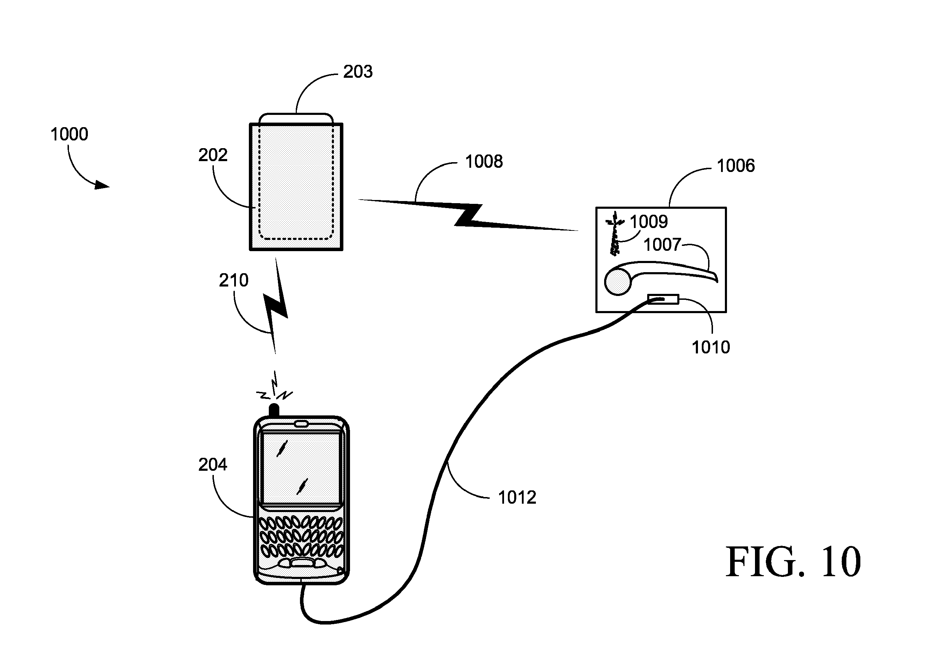

There are several ways for mobile device 204 to cause smart card reader 202 and personal computer 206 to share cryptography information, as will be explained with respect to figures 6 - 8 for symmetric keys and figures 9 and 10 for public keys.

Figures 6, 7 and 8 are flowcharts of exemplary methods to be performed by client device 104 (for example, mobile device 204) to cause client device 106 (for example, personal computer 206) and server 102 (for example, smart card reader 202) to share a symmetric key, according to some embodiments of the invention.

At 600 (figure 6), mobile device 204 may generate a symmetric key. At 802, mobile device 204 may send the key to smart card reader 202 over communication link 210 in a secured and authenticated manner, and may send the key to personal computer 206 over communication link 212 in a secured and authenticated manner. For example, mobile device 204 may encrypt the newly generated symmetric key using an already-established key-system with smart card reader 202 and send the encrypted key to smart card reader 202. Smart card reader 202 may then decrypt the key using the already-established key-system. Mobile device 204 may send the newly generated symmetric key to personal computer 206 via the USB cable that forms communication link 212. Once smart card reader 202 and personal computer 206 share the newly generated symmetric key, mobile device 204 may discard its copy of the newly generated symmetric key.

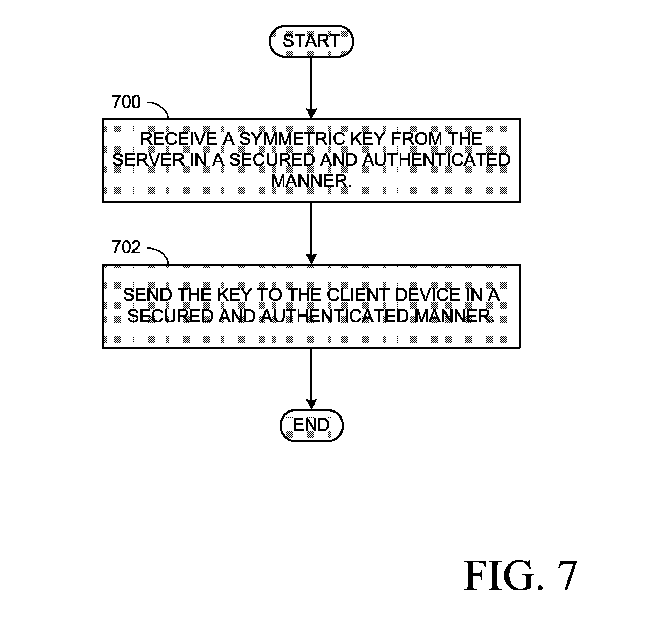

At 700 (figure 7), mobile device 204 may receive a symmetric key from smart card reader 202 over communication link 210 in a secured and authenticated manner. At 702, mobile device 204 may send the key received from smart card reader 202 in a secured and authenticated manner to personal computer 206 over communication link 212.

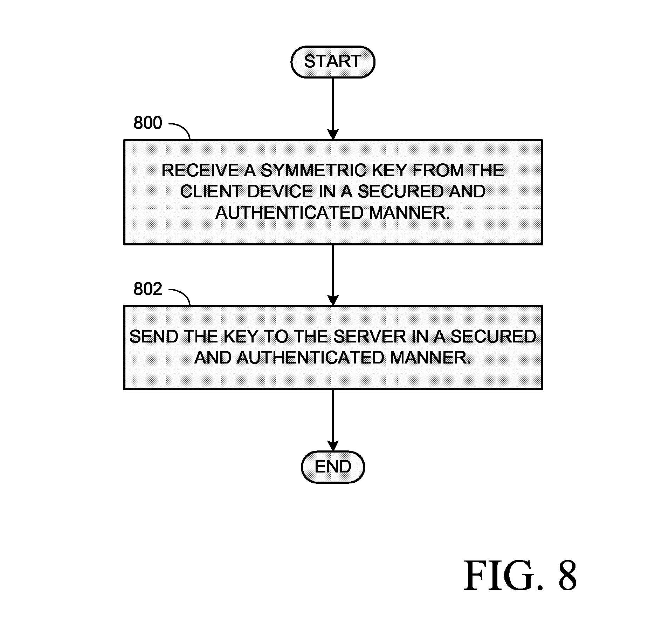

At 800 (figure 8), mobile device may receive a symmetric key from personal computer 206 over communication link 212 in a secured and authenticated manner. At 802, mobile device 204 may send the key received from personal computer 206 in a secured and authenticated manner to smart card reader 202 over communication link 210.

Figure 9 is a flowchart of an exemplary method to be performed by client device 104 (for example, mobile device 204), to cause client device 106 (for example, personal computer 206) and server 102 (for example, smart card reader 202) to share public keys, according to some embodiments of the invention.

At 900, mobile device 204 may receive the public key of personal computer 206 over communication link 212 in an authenticated manner. At 902, mobile device 204 may send the public key to smart card reader 202 over communication link 210 in an authenticated manner. At 910, mobile device 204 may receive the public key of smart card reader 204 over communication link 212 in an authenticated manner. At 912, mobile device 204 may send the public key to personal computer 206 over communication link 212 in an authenticated manner. The timing of the receipt and forwarding of the public key of personal computer 206 is not necessarily related to the timing of the receipt and forwarding of the public key of smart card reader 202.

The embodiments of the invention that have been described with respect to the particular example shown in figure 2 are equally applicable to any system having the lack of symmetry regarding the authentication, and possibly also the security, of communication links shown in figure 1. In some embodiments, communication links 110 and 112 are authenticated (although one of these links may also be secured), yet communication link 108 is vulnerable. In other embodiments, communication links 110 and 112 are both authenticated and secured, yet communication link 108 is vulnerable. By causing server 102 and client device 106 to share cryptography information, client device 104 enables communication link 108 to be secured.

For example, in a system 1000 shown in figure 10, client device 104 is wireless-enabled mobile device 204, client device 106 is a wireless-enabled door lock 1006, and server 102 is smart card reader 202. Smart card 203 is shown inserted into smart card reader 202. Door lock 1006 includes a door handle 1007, an internal antenna 1009, and a connector 1010.

The first time the person whose security information is stored on smart card 203 approaches door lock 1006, the person may connect mobile device 204 to door lock 1006 with a communication link 1012 that does not compromise security or authentication, for example, a USB cable inserted into connector 1010. Mobile device 204 may automatically recognize that door lock 1006 wants to securely communicate with smart card reader 202 once communication link 1012 has been established. Alternatively, door lock 1006 may transmit such a request to mobile device 204 via communication link 1012.

Mobile device 204 may cause smart card reader 202 and door lock 1006 to share cryptography information. Once smart card reader 202 and door lock 1006 have shared cryptography information, they can send information over a communication link 1008 in a secured and authenticated manner.

The next time the person approaches door lock 1006 with smart card 203 and smart card reader 204, door lock 1006 and smart card reader 202 may communicate in a secured and authenticated manner over communication link 1008 to verify the identity of the person to door lock 1006. Communication link 1008 may be a wireless communication link, for example, a Bluetooth ® communication link.

In a further example, server 102 of figure 1 may be a bank server, client device 104 may be a mobile device, and client device 106 may be a personal computer. The user of the mobile device may go to the bank and connect the mobile device to the bank server using a communication link that does not compromise security or authentication, for example a USB cable. The mobile device and the bank server may share cryptographic information, for example, a first symmetric key, over the secure communication link. The mobile device may then be able to communicate securely with the bank server over communication link 110 using the first symmetric key. For example, communication link 110 may include wireless links and the Internet. If the user of the mobile device now wants to use the personal computer to communicate securely with the bank server, then according to some embodiments of the invention, the mobile device may generate a second symmetric key, transmit the second symmetric key to the personal computer using a communication link that does not compromise security or authentication, for example a USB cable, and transmit the second symmetric key to the bank server by encrypting it with the first symmetric key and transmitting it over communication link 110. Now the personal computer and the bank server share the second symmetric key and can communicate securely over communication link 108, for example, the Internet.

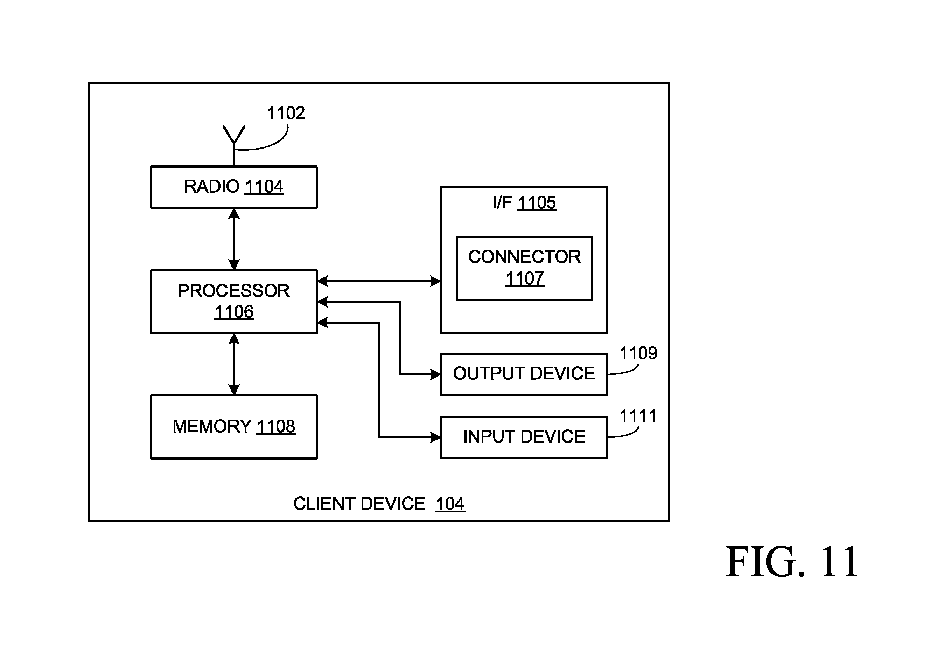

Figure 11 is a simplified block diagram of an exemplary client device 104, according to some embodiments of the invention.

A non-exhaustive list of examples for client device 104 includes a cellular phone, a personal digital assistant (PDA), an electronic mail (Email) client, a gaming device, a laptop computer, a notebook computer, a desktop computer, a server computer, and any other suitable apparatus.

Client device 104 may include a first communication interface, for example, an antenna 1102 coupled to a radio 1104. Client device 104 may also include a processor 1106 having baseband functionality, which is coupled to radio 1104. Client device 104 may also include a second communication interface 1105, for example, including a connector 1107, coupled to processor 1106.

Client device 104 may also include a memory 1108, which may be fixed in or removable from client device 104. Memory 1108 may be coupled to processor 1106 or partly embedded in processor 1106. Radio 1104 and processor 1106 may be part of the same integrated circuit or in separate integrated circuits. Similarly, processor 1106 and memory 1108 may be part of the same integrated circuit or in separate integrated circuits.

Memory 1108 may store executable code, which when executed by processor 1106, causes server 102 (figure 1) and client device 106 (figure 1) to share cryptography information.

Client device 104 may optionally include an output device 1109 to prompt a user of the client for permission for client device 106 to share the cryptography information with server 102, and an input device 1111 to receive a response from the user.

A non-exhaustive list of examples for antenna 1102 includes a dipole antenna, a monopole antenna, a multilayer ceramic antenna, a planar inverted-F antenna, a loop antenna, a shot antenna, a dual antenna, an omnidirectional antenna and any other suitable antenna.

A non-exhaustive list of examples for processor 1106 includes a central processing unit (CPU), a digital signal processor (DSP), a reduced instruction set computer (RISC), a complex instruction set computer (CISC) and the like. Furthermore, processor 1106 may be part of an application specific integrated circuit (ASIC) or may be a part of an application specific standard product (ASSP).

A non-exhaustive list of examples for memory 1108 includes any combination of the following:
a) semiconductor devices such as registers, latches, read only memory (ROM), mask ROM, electrically erasable programmable read only memory devices (EEPROM), flash memory devices, non-volatile random access memory devices (NVRAM), synchronous dynamic random access memory (SDRAM) devices, RAMBUS dynamic random access memory (RDRAM) devices, double data rate (DDR) memory devices, static random access memory (SRAM), universal serial bus (USB) removable memory, and the like;
b) optical devices, such as compact disk read only memory (CD ROM), and the like; and
c) magnetic devices, such as a hard disk, a floppy disk, a magnetic tape, and the like.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the spirit of the invention.

## Claims

1. A method of using a first client device (104) to cause a server (102) and a second client device (106) to share cryptography information that is to be used to secure a communication link (108) between said server (102) and said second client device (106), wherein said communication link (108) does not include said first client device (104), the method comprising:
communicating said cryptography information from said first client device (104) to at least one of said server (102) and said second client device (106) over a communication link (110, 112) between said first client device (104) and said at least one of said server (102) and said second client device (106).

2. The method of claim 1, wherein causing said server (102) and said second client device (106) to share said cryptography information comprises at least:
generating a cryptographic key;
sending said cryptographic key from said first client device (104) to said second client device (106) in a secured and authenticated manner; and
sending said cryptographic key from said first client device (104) to said server (102) in a secured and authenticated manner.

3. The method of claim 1, wherein causing said server (102) and said second client device (106) to share said cryptography information comprises at least:
receiving a symmetric cryptographic key in a secured and authenticated manner at said first client device (104) from one of said server (102) and said second client device (106); and
sending said symmetric cryptographic key in a secured and authenticated manner from said first client device (104) to the other of said server (102) and said second client device (106).

4. The method of claim 1, wherein causing said server (102) and said second client device (106) to share said cryptography information comprises at least:
receiving a public cryptographic key in an authenticated manner at said first client device (104) from one of said server (102) and said second client device (106); and
sending said public cryptographic key in an authenticated manner from said first client device (104) to the other of said server (102) and said second client device (106).

5. The method of any one of claims 1 to 4, further comprising:
recognizing that said second client device (106) wants to communicate securely with said server (102); and
checking that said second client device (106) has permission to communicate securely with said server (102).

6. The method of claim 5, wherein checking that said second client device (106) has permission to communicate securely with said server (102) comprises at least:
asking a user of said first client device (104) for said permission,
or
checking a policy for said permission.

7. A first client device (104) comprising:
a first communication interface (1102, 1104) through which said first client device (104) is able to communicate in an authenticated manner with a server (102);
a second communication interface (1105) through which said first client device (104) is able to communicate in an authenticated manner with a second client device (106);
a processor (1106); and
a memory (1108) able to store executable code which, when executed by said processor (1106), causes said first client device (104) to communicate cryptography information to at least one of said server (102) and said second client device (106) over a communication link (110, 112) between said first client device (104) and said at least one of said server (102) and said second client device (106).

8. The first client device (104) of claim 7, wherein said first client device (104) is arranged to communicate said cryptography information in order to enable said server (102) and said second client device (106) to secure a communication link (108) between said server (102) and said second client device (106) that does not include said first client device (104).

9. The first client device (104) of claim 7 or claim 8, wherein said first client device (104) is arranged to communicate public keys of said server (102) and said second client device (106).

10. The first client device (104) of claim 7 or claim 8, wherein said first client device (104) is able to communicate through said first communication interface (1102, 1104) in a secured and authenticated manner with said server (102), said first client device (104) is able to communicate through said second communication interface (1105) in a secured and authenticated manner with said second client device (106), and said first client device (104) is arranged to communicate a symmetric key.

11. The first client device (104) of any one of claims 7 to 10, further comprising:
an output device (1109) arranged to prompt a user of said first client device (104) for permission for said second client device (106) to share said cryptography information with said server (102); and
an input device (1111) arranged to receive a response from said user.

12. The first client device (104) of any one of claims 7 to 10, wherein said executable code, when executed by said processor (1106), also causes said first client device (104) to check a policy for permission for said second client device (106) to share said cryptography information with said server (102).

13. The first client device (104) of claim 12, wherein said policy is stored in said memory (1108).

14. The first client device (104) of any one of claims 7 to 13, wherein said first client device (104) is a mobile device (204), and said first communication interface comprises an antenna (1102) and a radio (1104).

15. The first client device (104) of claim 14, wherein said radio (1104) is compatible with the Bluetooth® standard.

16. The first client device (104) of any one of claims 7 to 15, wherein said second communication interface (1105) comprises a connector (1107).

17. A system (100) comprising:
a server (102);
a first client device (104) capable of communicating in an authenticated manner with said server (102) over a first communication link (110); and
a second client device (106) capable of communicating in an authenticated manner with said first client device (104) over a second communication link (112),
wherein said first client device (104) is arranged to communicate cryptography information to at least one of said server (102) and said second client device (106) over at least one of said first communication link (110) and said second communication link (112).

18. The system (100) of claim 17, wherein said first client device (104) is arranged to communicate said cryptography information in order to enable said server (102) and said second client device (106) to secure a third communication link (108) between said server (102) and said second client device (106) that does not include said first client device (104).

19. The system (100) of claim 17 or claim 18, wherein said first communication link (110) and said third communication link (108) are Bluetooth® links.

20. A machine readable medium comprising program code means executable in a processor (1106) of the device (104) of any one of claims 7 to 16 for implementing the method of any one of claims 1 to 6.

## Amended claims

### Amended claims in accordance with Rule 86(2) EPC.

**1.** A method for sharing cryptography information, the method comprising:
having a first client device (104) receive a public cryptographic key belonging to a second device (102/106) over a first authenticated communication link (110/112) between said first device (104) and said second device (102/106); and
having said first device (104) send said public cryptographic key to a third device (106/102) over a second authenticated communication link (112/110) between said first device (104) and said third device (106/102),
wherein said second device (102/106) and said third device (106/102) lack an authenticated communication link therebetween, and said public cryptographic key enables said third device (106/102) to send encrypted communications to said second device (102/106), and
wherein one of said second device (102/106) and said third device (106/102) is a server (102) and the other is another client device (106).

**2.** The method of claim 1, further comprising:
having said first device (104) receive a public cryptographic key belonging to said third device (106/102) over said second authenticated communication link (112/110); and
having said first device (104) send said public cryptographic key to said second device (102/106) over said first authenticated communication link (110/112).

**3.** A method for sharing cryptography information, the method comprising:
having a first client device (104) receive a symmetric cryptographic key from a second device (102/106) over a first secure and authenticated communication link (110/112) between said first device (104) and a second device (102/106); and
having said first device (104) send said symmetric cryptographic key to a third device (106/102) over a second secure and authenticated communication link (112/110) between said first device (104) and a third device (106/102),
wherein said second device (102/106) and said third device (106/102) lack a secure and authenticated communication link therebetween, and said symmetric cryptographic key can be used to encrypt communications between said second device (102/106) and said third device (106/102), and
wherein one of said second device (102/106) and said third device (106/102) is a server (102) and the other is another client device (106).

**4.** A method for sharing cryptographic information, the method comprising:
having a first client device (104) generate a symmetric cryptographic key;
having said first device (104) send said symmetric cryptographic key over a first secure and authenticated communication link (110/112) to a second device (102/106); and
having said first device (104) send said symmetric cryptographic key over a second secure and authenticated communication link (112/110) to a third device (106/102),
wherein said second device (102/106) and said third device (106/102) lack a secure and authenticated communication link therebetween, and said symmetric cryptographic key can be used to encrypt communications between said second device (102/106) and said third device (106/102), and
wherein one of said second device (102/106) and said third device (106/102) is a server (102) and the other is another client device (106).

**5.** The method of any one of claims 1 to 4, further comprising:
recognizing that said other client device (106) wants to communicate securely with said server (102); and
checking that said other client device (106) has permission to communicate securely with said server (102).

**6.** The method of claim 5, wherein checking that said other client device (106) has said permission comprises at least:
asking a user of said first device (104) for said permission,
or
checking a policy for said permission.

**7.** A first client device (104) comprising:
a first communication interface (1102, 1104) through which said first client device (104) is able to communicate over a first authenticated communication link (110/112) with a server (102);
a second communication interface (1105) through which said first client device (104) is able to communicate over a second authenticated communication link (112/110) with a second client device (106);
a processor (1106); and
a memory (1108) able to store executable code means which, when executed by said processor (1106), is arranged to cause said first client device (104) to communicate a public cryptographic key to one of said server (102) and said second client device (106) over the corresponding one of said first link (110/112) and said second link (112/110) while said server (102) and said second client device (106) lack an authenticated communication link therebetween,
wherein said public cryptographic key belongs to the other of said server (102) and said second client device (106) and can be used to encrypt communications from said one of said server (102) and said second client device (106) to said other of said server (102) and said second client device (106).

**8.** A first client device (104) comprising:
a first communication interface (1102, 1104) through which said first client device (104) is able to communicate over a first secure and authenticated communication link (110) with a server (102);
a second communication interface (1105) through which said first client device (104) is able to communicate over a second secure and authenticated communication link (112) with a second client device (106);
a processor (1106); and
a memory (1108) able to store executable code means which, when executed by said processor (1106), is arranged to cause said first client device (104) to communicate a symmetric cryptographic key to one of said server (102) and said second client device (106) over the corresponding one of said first link (110) and said second link (112) while said server (102) and said second client device (106) lack a secure and authenticated communication link therebetween, so that said server (102) and said second client device (106) can use said symmetric cryptographic key to encrypt communications therebetween.

**9.** The first client device (104) of claim 8, wherein said executable code means, when executed by said processor (1106), is further arranged to generate said symmetric cryptographic key and to communicate said symmetric cryptographic key to the other of said server (102) and said second client device (106) while said server (102) and said second client device (106) lack a secure and authenticated communication link therebetween, so that said server (102) and said second client device (106) can use said symmetric cryptographic key to encrypt communications therebetween.

**10.** The first client device (104) of any one of claims 7 to 9, further comprising:
an output device (1109) arranged to prompt a user of said first client device (104) for permission for said second client device (106) to share said cryptographic key with said server (102); and
an input device (1111) arranged to receive a response from said user.

**11.** The first client device (104) of any one of claims 7 to 9, wherein said executable code means, when executed by said processor (1106), is also arranged to cause said first client device (104) to check a policy for permission for said second client device (106) to share said cryptographic key with said server (102).

**12.** The first client device (104) of claim 11, wherein said memory (1108) is arranged to store said policy.

**13.** The first client device (104) of any one of claims 7 to 12, wherein said first client device (104) is a mobile device (204), and said first communication interface comprises an antenna (1102) and a radio (1104).

**14.** The first client device (104) of claim 15, wherein said radio (1104) is compatible with the Bluetooth® standard.

**15.** The first client device (104) of any one of claims 7 to 14, wherein said second communication interface (1105) comprises a connector (1107).

**16.** A system (100) comprising:
a server (102);
a first client device (104) capable of communicating with said server (102) over a first authenticated communication link (110); and
a second client device (106) capable of with said first client device (104) over a second authenticated communication link (112),
wherein said first client device (104) is arranged to communicate a public cryptographic key to one of said server (102) and said second client device (106) over the corresponding one of said first communication link (110) and said second communication link (112) while said server (102) and said second client device (106) lack an authenticated communication link therebetween, and
wherein said public cryptographic key belongs to the other of said server (102) and said second client device (106) and can be used to encrypt communications from said one of said server (102) and said second client device (106) to said other of said server (102) and said second client device (106).

**17.** A system (100) comprising:
a server (102);
a first client device (104) capable of communicating with said server (102) over a first secure and authenticated communication link (110); and
a second client device (106) capable of with said first client device (104) over a second secure and authenticated communication link (112),
wherein said first client device (104) is arranged to communicate a symmetric cryptographic key to one of said server (102) and said second client device (106) over the corresponding one of said first communication link (110) and said second communication link (112) while said server (102) and said second client device (106) lack a secure and authenticated communication link therebetween, so that said server (102) and said second client device (106) can use said symmetric cryptographic key to encrypt communications therebetween.

**18.** The system (100) of claim 17, wherein said first client device (104) is further arranged to generate said symmetric cryptographic key and to communicate said symmetric cryptographic key to the other of said server (102) and said second client device (106) while said server (102) and said second client device (106) lack a secure and authenticated communication link therebetween.

**19.** The system (100) of any one of claims 16 to 18, wherein said first communication link (110) is a Bluetooth® link.

**20.** A machine readable medium comprising program code means executable in a processor (1106) of the device (104) of any one of claims 7 to 15 for implementing the method of any one of claims 1 to 6.
